# EUROPEAN PATENT SPECIFICATION

(11) **EP 4 054 865 B1**
(45) Date of publication and mention of the grant of the patent: **03.09.2025**
(21) Application number: 20886154.2
(22) Date of filing: 04.11.2020
(51) Int. Cl.: B60C 11/13, B60C 11/03, B60C 11/11, B60C 11/117, B60C 19/00

(54) **A SYSTEM AND METHOD FOR ALTERING TIRE NOISE**
SYSTEM UND VERFAHREN ZUR REIFENGERÄUSCHVERÄNDERUNG
SYSTÈME ET PROCÉDÉ POUR MODIFIER LE BRUIT D'UN PNEU

(30) Priority: 04.11.2019 US 201962930191 P
(43) Date of publication of application: 14.09.2022
(73) Proprietor: Atturo Tire Corp., Waukegan, IL 60087 (US)
(72) Inventor: MATHIS, Michael, Wadsworth, IL 60083 (US)
(74) Representative: Walther Bayer Faber Patentanwälte PartGmbB
(86) International application number: PCT/US2020/058854
(87) International publication number: WO 2021/091993

(56) References cited:
- EP-A2- 1 048 488
- EP-A2- 1 048 488
- JP-A- 2000 309 207
- JP-A- 2005 096 514
- JP-A- 2014 000 853
- JP-B2- 3 998 574
- US-A1- 2006 042 738
- US-A1- 2008 047 644
- US-A1- 2011 209 806
- US-B1- 6 484 772

## Description

### Background of the Invention

The present invention relates to a system and method for altering tire noise by diffusing airflow in tread void. Vehicles such as passenger cars and trucks typically operate on paved road surfaces. During operation, vehicles generate noise from various parameters that may be heard both inside and outside the vehicle. For example a vehicle may generate noise from its engine, exhaust, drive train, wind resistance, tires, all of which can vary according to the speed of the vehicle and condition of the paved surface. It has been desirable to utilize vehicle and tire design parameters to minimize noise created by vehicles to satisfy the comfort of vehicle occupants as well as mitigate exterior noise that is expelled into the environment.

In operation, the tires of a vehicle are a source of noise. Tires generate noise through their interaction with the road surface and the surrounding air. Tires may generate noise through vibrations created as the tire rotates and connects with the road surface. For example, vibration in the tire body may result from stimulation of the casing and tread by variations in the road surface. Noise may also be created through the mechanical pumping of air as the tread curvature comes into contact with the road. As the tread rotates and contacts the road, the tread elements move, squeezing the tread grooves when contacting the road and spreading them as the tread disengages from the road. Air trapped between the tread elements in the void area or grooves of the tire flows through the grooves to create noise. Noise may also be created by the tread pattern returning to its natural shape after disengaging with the road surface. The movement of the tread creates vibrations that may create an audible sound.

Among the factors that impact the noise generated by a tire is tread design. The size, shape, and angle of the tread elements effect how the tire interacts with the road and how the tire moves through the air. For example, circumferential tread designs have tread blocks arranged in a straight line around the circumference of the tire. Such tread designs generally have a low rolling resistance and move air through the circumferential grooves. Radial tread designs have tread blocks that are visually across a tread pattern. Radial tread designs may have a larger void area and laterally shaped grooves to increase traction on non-paved surfaces such as dirt, mud, or rocks. Further information on the technical field to which the present invention relates can be obtained from JP 2000 309 207 A, JP 2005 096 514 A, JP 2014 000 853 A, JP 3 998 574 B2 and EP 1 048 488 A2.

One technique to reduce tire tread noise is to offset tread elements in a manner that creates a wider range of frequencies generated by the tire. In some instances the frequencies may offset, in others it is desired to avoid creating similar harmonics which may be perceived as more intense or louder tire noise. Tread offset techniques help to reduce noise in both circumferential and radial tread designs. However, it is desirable to further reduce the noise generated by a vehicle tire. It may also be desirable to alter the audible sounds generated by the tire during operation. Thus, it may be advantageous to provide a system and method to diffuse airflow through tire tread to alter tire noise.

### Summary of the Invention

In an embodiment, the present invention is directed to a tire according to claim 1. The tire includes a tread portion and a sidewall portion. The tread portion has tread elements to form a tread pattern, wherein said tread elements include a plurality of tread blocks. The tread blocks have a plurality of tread block sides. At least one of the tread block sides has a notch. The notch may be of any size, shape, and orientation dependent upon the tread design and desired audible qualities of the tire. One of the tread blocks is a shoulder block having a shoulder block side wherein said notch is on said shoulder block side. In an embodiment, at least one of the tread blocks is a center block having a center block side wherein a notch is on said center block side. In an embodiment, said notch has a hexagon shape.

Another embodiment of the present invention is directed to a system for altering audible sounds generated by the tire during operation according to claim 6. The system comprises a tread portion of a tire with a plurality of tread blocks. The tread blocks have a plurality of tread block sides and a notch on a peripheral shoulder block side. The notch may be of any size, shape, and orientation dependent upon the tread design and desired audible qualities of the tire. The notch is located on a peripheral shoulder block side. In another embodiment, a notch may be located on a center block side.

Another embodiment of the present invention includes a method for altering audible sounds generated by the tire during operation according to claim 10. The method includes forming a plurality of tread blocks having tread block sides on a tread portion of a tire. The method also includes placing a notch on a peripheral shoulder block side.

### Brief Description of the Drawings

FIG. 1 is a perspective view of the tire.
FIG. 2 is a front view of the tire.
FIG. 3 is a side view of the tire.
FIG. 4 is front view of the tire.
FIG. 5 is a perspective view of the tire.
FIG. 6 is a front view of the tire.
FIG. 7 is a side view of the tire.
FIG. 8 is a front view of the tire.
FIG. 9 is a front view of the tire.
FIG. 10 is a front view of the tire.

### Detailed Description of the Invention

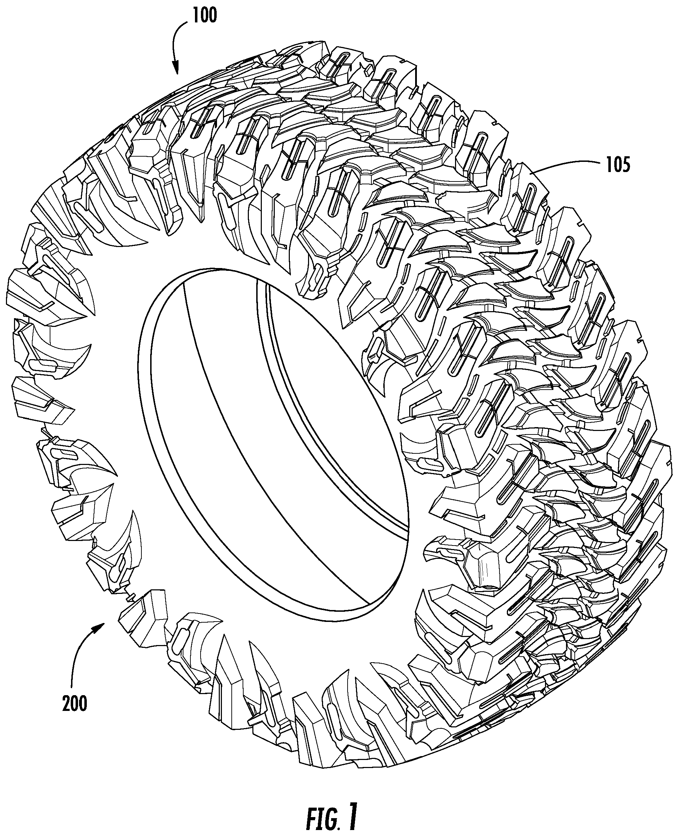

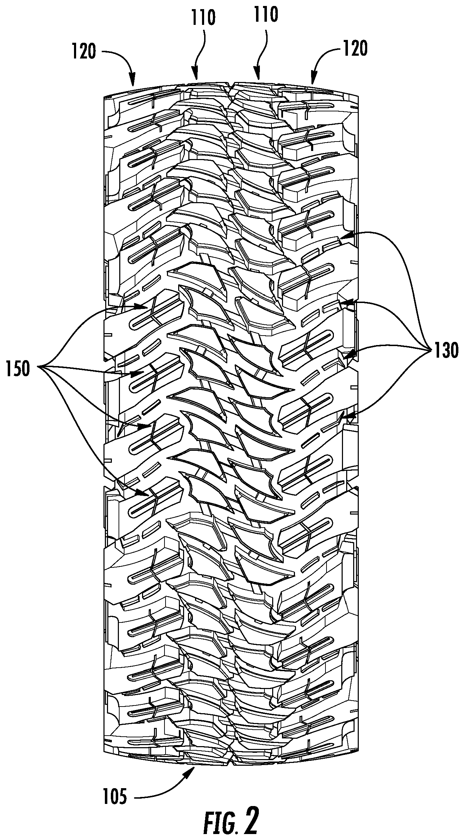

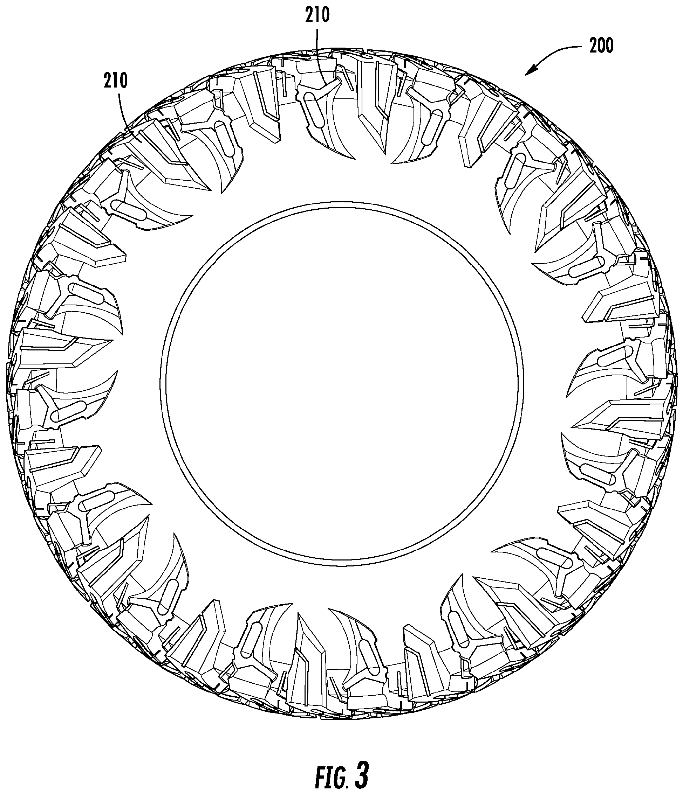

As shown in an embodiment of FIGs. 1, 2 and 3, a tire 100 typically includes a tread portion 105 and a sidewall portion 200. The tread portion 105 may include a plurality of tread elements that comprise a tread pattern. For example, the tread portion 105 includes tread elements such as center blocks 110, shoulder blocks 120, stone ejectors 130, and void area 150. As shown in FIGs 1, 2, and 3, the center blocks 110 reside in two rows in the center of the tread portion 100 of the tire. The shoulder blocks 120 reside in two rows laterally spaced from the center blocks 110. The stone ejectors 130 reside as raised portions between the shoulder blocks 120. The void area 150 is the space between the center blocks 110, shoulder blocks 120 and stone ejectors 130. The center blocks 110, shoulder blocks 120, stone ejectors 130, and void area 150 as shown are an example and may be other shapes, sizes, or orientations. The tire 100 also has a sidewall portion 200 that includes sidewall elements such as sidewall blocks 210. The sidewall portion 200 and sidewall blocks 210 as shown are an example and may be other shapes, sizes, or orientations.

The tread portion 105 is in contact with a surface, such as a paved road or unpaved surface, such as dirt, mud, stone, rock or other surface. As the tire 100 operates, the tread portion 105 both rotates around the axis of a vehicle and travels in the direction along the surface as the vehicle moves. As the tire 100 rotates and traverses a surface, air flows between the center blocks 110, shoulder blocks 120, stone ejectors 130 and through the void area 150. Such airflow creates an audible sound that may be observed in operation. In general, the amount of airflow is related to the speed of rotation and velocity of the vehicle.

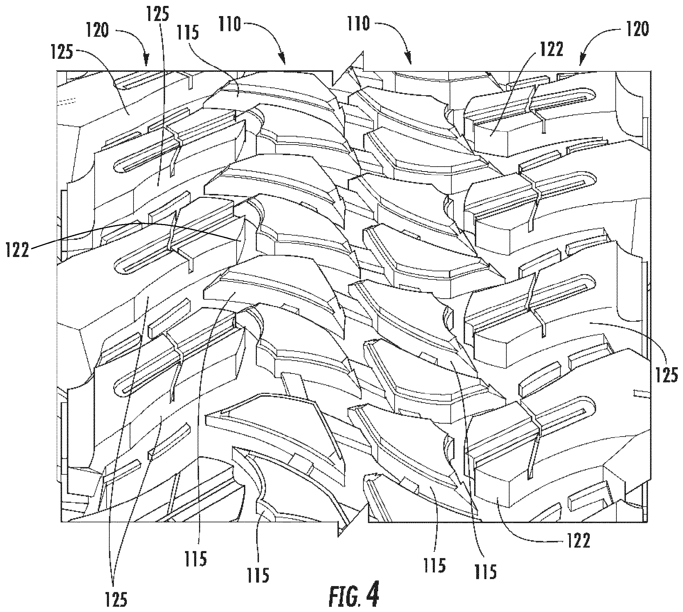

Referring now to the embodiment of FIG 4, the center blocks 110 and shoulder blocks 120 are three-dimensional elements that have depth in relation to the void area 150. The center blocks 110 each have center block sides 115 and the shoulder blocks 120 each having an inner shoulder block side 122 and outer shoulder block sides 125. The center block sides 115 extend from the void area 150 into a different plane to create depth for the center blocks 110. The inner shoulder block sides 122 and the outer shoulder block sides 125 extend from the void area 150 into a different plane to create depth for the shoulder blocks 120.

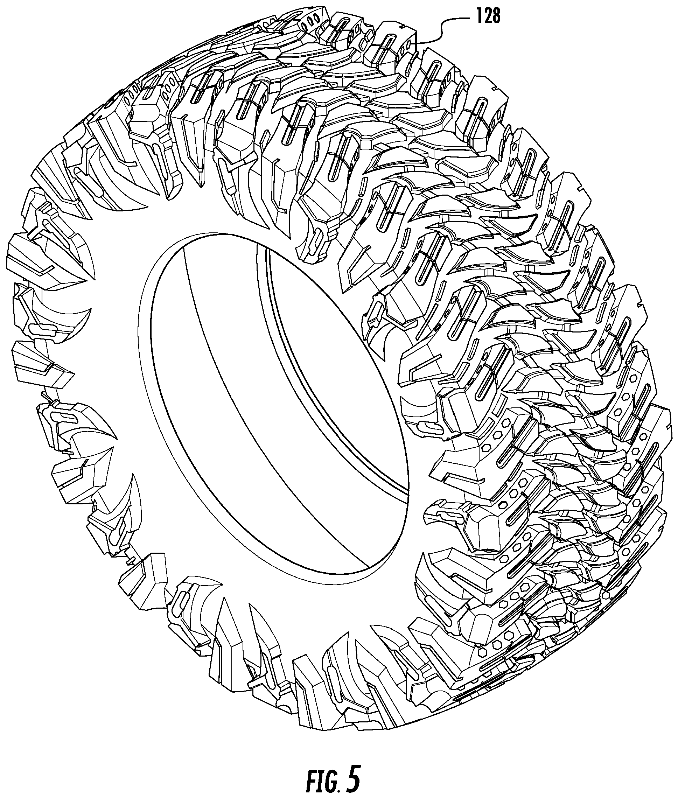

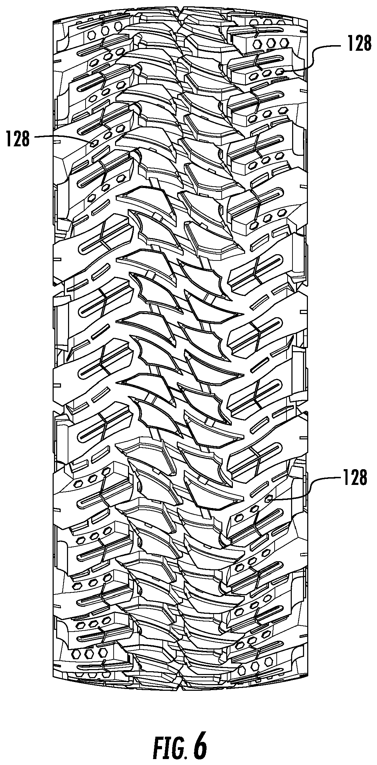

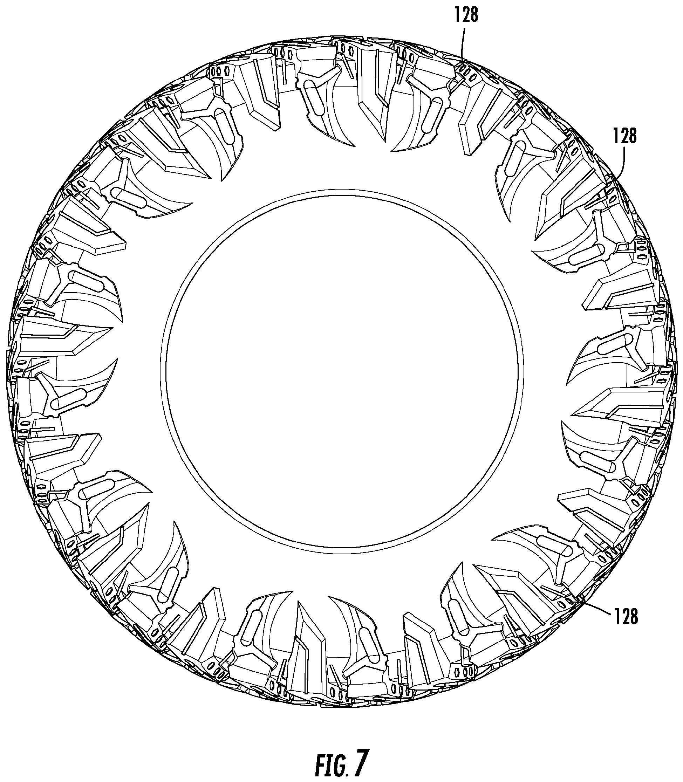

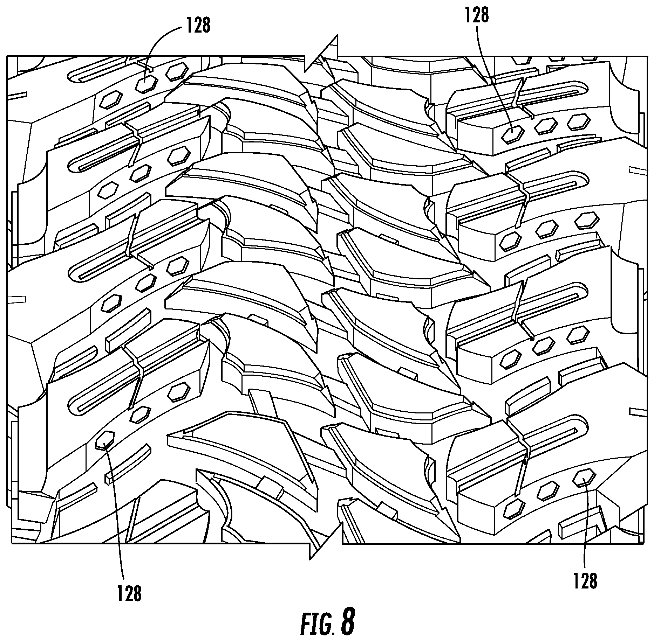

Referring now to the embodiment of FIGs. 5, 6, 7, and 8 the outer shoulder block sides 125 include a notch 128. The notch 128 may be an indentation in the outer shoulder block sides 125. A plurality of notches 128 are shown on the outer shoulder block sides 125 in FIGs. 5, 6, and 7. The notch(es) 128 effect how air flows among the center blocks 110, shoulder blocks 120, and stone ejectors 130 and through the void area 150. As such, the notches 128 effect the audible sound generated by air flowing among the center blocks 110, shoulder blocks 120, and stone ejectors 130 and through the void area 150. The shape, size, position, and number of notches 128 may be used as a design parameter to reduce the audible sound generated by air flowing through tread pattern 105. The notches 128 may be placed on multiple shoulder blocks sides 125 to create a desired air flow pattern.

In an embodiment as shown in FIGS. 5, 6, 7, 8, and 9, the notch 128 is hexagon shaped. The shape, size, position, and number of notches 128 affect how the air flows along the outer shoulder block sides 125 and thus among the center blocks 110, shoulder blocks 120, and stone ejectors 130 and through the void area 150. As air flows across the hexagon shape, the velocity and direction of the air current is altered, which alters the audible sound generated by the air flow. As shown, a plurality of notches 128 may be used to create a desired alteration in airflow to alter the audible sounds generated by the tire during operation.

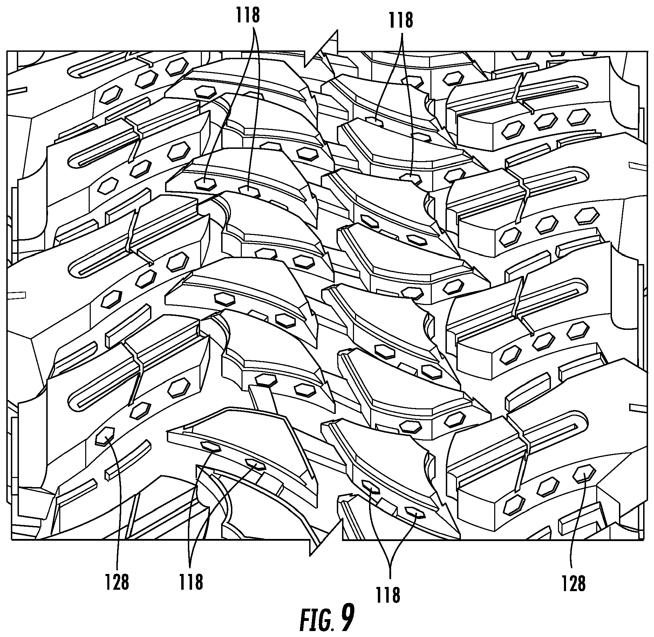

Referring now to the embodiment of FIG. 9, the outer shoulder block sides 125 include the notch 128 and the center block sides 115 include a notch 118. The shape, size, position, and number of notches 118 affect how the air flows along the center block sides 110 and thus among the center blocks 110, shoulder blocks 120, and stone ejectors 130 and through the void area 150. As air flows across the hexagon shape, the velocity and direction of the air current is altered, which alters the audible sound generated by the air flow. As shown, a plurality of notches may be used to create a desired alteration in airflow to alter the audible sounds generated by the tire during operation.

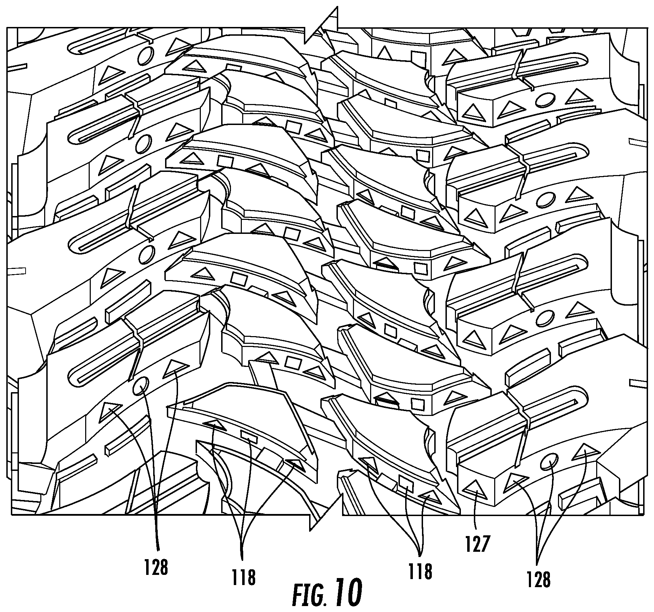

Referring now to the embodiment of FIG. 10, the inner shoulder block sides 122 and the outer shoulder block sides 125 include the notch 128 and the center block sides 115 include a notch 118. As shown in FIG. 10, the notch 128 and notch 118 may be shapes other than hexagons. As shown in FIG. 10, the notches 128 are shown in varying positions, sizes and shapes on the outer shoulder block sides 125 inner shoulder block sides 122 and the outer shoulder block sides 125. The notches 118 are shown in varying positions, sizes and shapes on the center block sides 115. The size, shape, position and orientation of notch 118 and notch 128 may be used to create a desired alteration in airflow to alter the audible sounds generated by the tire during operation.

A person of ordinary skill in the art would recognize that modifying the size, shape and orientation of the notches can change how air flow through tire tread and change the audible sound of a tire's tread. Modifying the size, shape and orientation of the notches may be used to minimize the audible sound of a tire's tread. Alternatively, modifying the size, shape, and orientation of the notches may be used to achieve a desired audible sound of a tire's tread.

In an embodiment, the present invention includes a method for influencing air flow through the tread pattern of a tire. Influencing the air flow through the tread pattern of a tire can alter the audible sounds generated by the tire during operation. The method includes forming a plurality of tread blocks having tread block sides on a tread portion of a tire and placing a notch on the peripheral shoulder block sides. The placement, shape, and size of the notches can be used to alter the audible sounds generated by the tire during operation. In an embodiment, the notches may be used to reduce tire noise. In another embodiment, it is contemplated that the notches may be designed to generate a desirable audible sound of the tire tread.

Furthermore, while the particular preferred embodiments of the present invention have been shown and described, it will be obvious to those skilled in the art that changes and modifications may be made without departing from the teaching of the invention as claimed. The matter set forth in the foregoing description and accompanying drawings is offered by way of illustration.

## Claims

1. (Currently Amended) A tire (100) comprising:
a tread portion (105) and a sidewall portion (200);
said tread portion (105) having tread elements to form a tread pattern, wherein said tread elements include a plurality of tread blocks, stone ejectors (130), and void areas (150);
wherein air flows between the plurality of tread blocks, the stone ejectors (130), and the void areas (150) during use of the tire (100);
wherein audible sounds are generated by the tire during use as the air flows between the plurality of tread blocks, the stone ejectors (130), and the void areas (150);
wherein the plurality of tread blocks includes at least one center block (110) and at least one shoulder block (120) separated by the void areas (150);
the center block (110) is located in the center of the tread portion (105);
the shoulder block (120) is spaced laterally from the center block (110) and oriented at an angle to a direction of travel of the tire (100), wherein the angle is less than 90°;
wherein the shoulder block (120) has peripheral shoulder block sides (125) that extend radially outward in a direction perpendicular to the direction of travel of the tire towards an adjacent shoulder block (120) and a central shoulder block side that extends radially inward in a direction that is parallel to the direction of travel of the tire towards the center block (110), and wherein each individual stone ejector of the stone ejectors (130) is substantially parallel to the peripheral shoulder block side (125); and
wherein the peripheral shoulder block sides (125) have a notch (128);
wherein the notch (128) has a shape, size, and position on the peripheral shoulder block sides (125);
wherein the shape, size, and position of the notch (128) control the air flow and the audible sounds generated by the tire (100) during use.

2. A tire (100) according to claim 1, wherein a notch (128) is on said central shoulder block side.

3. A tire (100) according to claim 1, wherein said center block (110) has a center block side.

4. A tire (100) according to claim 3, wherein a notch (128) is on said center block side.

5. A tire (100) according to claim 1, wherein said notch (128) has a hexagon shape.

6. A system for altering audible sounds generated by a tire (100) during operation, said system comprising:
a tread portion (105) and a sidewall portion (200) of the tire (100);
said tread portion (105) having tread elements to form a tread pattern, wherein said tread elements include a plurality of tread blocks, stone ejectors (130), and void areas (150);
wherein air flows between the plurality of tread blocks, the stone ejectors (130), and the void areas (150) during use of the tire (100);
wherein audible sounds are generated by the tire (100) during use as the air flows between the plurality of tread blocks, the stone ejectors (130), and the void areas (150);
wherein the plurality of tread blocks includes at least one center block (110) and at least one shoulder block (120) separated by the void areas (150);
the center block (110) is located in the center of the tread portion (105);
the shoulder block (120) is spaced laterally from the center block (110) and oriented at an angle to a direction of travel of the tire (100), wherein the angle is less than 90°;
wherein the shoulder block (120) has peripheral shoulder block sides (125) that extend radially outward in a direction perpendicular to the direction of travel of the tire (100) towards an adjacent shoulder block (120) and a central shoulder block side that extends radially inward in a direction that is parallel to the direction of travel of the tire (100) towards the center block (110), and
wherein each individual stone ejector of the stone ejectors (130) is substantially parallel to the peripheral shoulder block side (125); and
a notch (128) on the peripheral shoulder block sides (125);
wherein the notch (128) has a shape, size, and position on the peripheral shoulder block sides (125);
wherein the shape, size, and position of the notch (128) control the air flow and the audible sounds generated by the tire (100) during use.

7. A system according to claim 6, wherein said center block (110) has a center block side.

8. A system according to claim 7, wherein said notch (128) is on said center block side.

9. A system according to claim 6, wherein said notch (128) has a hexagon shape.

10. A method for altering audible sounds generated by a tire (100) during operation, said method comprising:
forming a plurality of tread blocks having tread block sides, stone ejectors (130), and void areas (150) on a tread portion (105) of the tire (100);
wherein the plurality of tread blocks includes at least one center block (110) and at least one shoulder block (120);
the center block (110) is located in the center of the tread portion (105);
the shoulder block (120) is spaced laterally from the center block (110) and oriented at an angle to a direction of travel of the tire (100), wherein the angle is less than 90°;
wherein the shoulder block (120) has peripheral shoulder block sides (125) that extend radially outward in a direction perpendicular to the direction of travel of the tire (100) towards an adjacent shoulder block (120) and a central shoulder block side that extends radially inward in a direction that is parallel to the direction of travel of the tire (100) towards the center block (110), and
wherein each individual stone ejector of the stone ejectors (130) is substantially parallel to the peripheral shoulder block side (125);
wherein the audible sounds are generated by the tire (100) during use as air flows between the plurality of tread blocks, the stone ejectors (130), and the void areas (150); and,
a notch (128) is formed at a position on the peripheral shoulder block sides (125);
wherein the notch (128) has a shape and size,
wherein the shape, size, and position of the notch (128) control the airflow and the audible sounds generated by the tire (100) during use.

## Patentansprüche

1. Reifen (100), der Folgendes umfasst:
einen Laufflächenabschnitt (105) und einen Seitenwandabschnitt (200);
wobei der Laufflächenabschnitt (105) Laufflächenelemente aufweist, um ein Laufflächenmuster zu bilden, wobei die Laufflächenelemente eine Vielzahl von Laufflächenblöcken, Steinauswerfern (130) und Hohlräume (150) umfassen;
wobei während der Benutzung des Reifens (100) Luft zwischen der Vielzahl von Laufflächenblöcken, den Steinauswerfern (130) und den Hohlräumen (150) strömt;
wobei hörbare Geräusche durch den Reifen während der Benutzung erzeugt werden, wenn die Luft zwischen der Vielzahl von Laufflächenblöcken, den Steinauswerfern (130) und den Hohlräumen (150) strömt;
wobei die Vielzahl von Profilblöcken mindestens einen Mittelblock (110) und mindestens einen Schulterblock (120) umfasst, die durch die Hohlräume (150) getrennt sind;
der Mittelblock (110) sich in der Mitte des Laufflächenabschnitts (105) befindet;
der Schulterblock (120) seitlich von dem Mittelblock (110) beabstandet und in einem Winkel zu einer Fahrtrichtung des Reifens (100) ausgerichtet ist, wobei der Winkel weniger als 90° beträgt;
wobei der Schulterblock (120) periphere Schulterblockseiten (125), die sich radial nach außen in einer Richtung senkrecht zur Fahrtrichtung des Reifens zu einem benachbarten Schulterblock (120) erstrecken, und eine zentrale Schulterblockseite aufweist, die sich radial nach innen in einer Richtung erstreckt, die parallel zur Fahrtrichtung des Reifens zum Mittelblock (110) verläuft, und wobei jeder einzelne Steinauswerfer (130) im Wesentlichen parallel zur peripheren Schulterblockseite (125) verläuft; und
wobei die peripheren Schulterblockseiten (125) eine Kerbe (128) aufweisen;
wobei die Kerbe (128) eine Form, Größe und Position auf den peripheren Schulterblockseiten (125) hat;
wobei die Form, die Größe und die Position der Kerbe (128) den Luftstrom und die hörbaren Geräusche steuern, die der Reifen (100) während des Gebrauchs erzeugt.

2. Reifen (100) nach Anspruch 1, wobei sich eine Kerbe (128) auf der zentralen Schulterblockseite befindet.

3. Reifen (100) nach Anspruch 1, wobei der Mittelblock (110) eine Mittelblockseite aufweist.

4. Reifen (100) nach Anspruch 3, wobei sich eine Kerbe (128) auf der Mittelblockseite befindet.

5. Reifen (100) nach Anspruch 1, wobei die Kerbe (128) die Form eines Sechsecks hat.

6. System zum Ändern hörbarer Geräusche, die von einem Reifen (100) während des Betriebs erzeugt werden, wobei das System umfasst:
einen Laufflächenabschnitt (105) und einen Seitenwandabschnitt (200) eines Reifens (100);
wobei der Laufflächenabschnitt (105) Laufflächenelemente aufweist, um ein Laufflächenmuster zu bilden, wobei die Laufflächenelemente eine Vielzahl von Laufflächenblöcken, Steinauswerfern (130) und Hohlräumen (150) umfassen;
wobei während der Benutzung des Reifens (100) Luft zwischen der Vielzahl von Laufflächenblöcken, den Steinauswerfern (130) und den Hohlräumen (150) strömt;
wobei hörbare Geräusche durch den Reifen (100) während der Benutzung erzeugt werden, wenn die Luft zwischen der Vielzahl von Laufflächenblöcken, den Steinauswerfern (130) und den Hohlräumen (150) strömt;
wobei die Vielzahl von Profilblöcken mindestens einen Mittelblock (110) und mindestens einen Schulterblock (120) umfasst, die durch die Hohlräume (150) getrennt sind;
der Mittelblock (110) befindet sich in der Mitte des Laufflächenabschnitts (105);
der Schulterblock (120) seitlich von dem Mittelblock (110) beabstandet und in einem Winkel zu einer Fahrtrichtung des Reifens (100) ausgerichtet ist, wobei der Winkel weniger als 90° beträgt;
wobei der Schulterblock (120) periphere Schulterblockseiten (125), die sich radial nach außen in einer Richtung senkrecht zur Fahrtrichtung des Reifens (100) zu einem benachbarten Schulterblock (120) erstrecken, und eine zentrale Schulterblockseite aufweist, die sich radial nach innen in einer Richtung erstreckt, die parallel zur Fahrtrichtung des Reifens (100) zum Mittelblock (110) verläuft, und wobei jeder einzelne Steinauswerfer (130) im Wesentlichen parallel zur peripheren Schulterblockseite (125) verläuft; und
eine Kerbe (128) an den Seiten des Schulterblocks,
wobei die Kerbe (128) eine Form, Größe und Position auf den peripheren Schulterblockseiten (125) hat;
wobei die Form, Größe und Position der Kerbe (128) den Luftstrom und die hörbaren Geräusche, die der Reifen (100) während des Gebrauchs erzeugt, steuern.

7. System nach Anspruch 6, wobei der Mittelblock (110) eine Mittelblockseite aufweist.

8. System nach Anspruch 7, wobei sich die Kerbe (128) auf der Mittelblockseite befindet.

9. System nach Anspruch 6, wobei die Kerbe (128) die Form eines Sechsecks hat.

10. Verfahren zum Ändern von hörbaren Geräuschen, die vom Reifen (100) während des Betriebs erzeugt werden, wobei das Verfahren umfasst:
Ausbilden einer Vielzahl von Laufflächenblöcken mit Laufflächenblockseiten, Steinauswerfern (130) und Hohlräumen (150) auf einem Laufflächenabschnitt (105) des Reifens (100);
wobei die Vielzahl von Profilblöcken mindestens einen Mittelblock (110) und mindestens einen Schulterblock (120) umfasst;
der Mittelblock (110) sich in der Mitte des Laufflächenabschnitts (105) befindet;
der Schulterblock (120) seitlich von dem Mittelblock (110) beabstandet und in einem Winkel zu einer Fahrtrichtung des Reifens (100) ausgerichtet ist, wobei der Winkel weniger als 90° beträgt;
wobei der Schulterblock (120) periphere Schulterblockseiten (125), die sich radial nach außen in einer Richtung senkrecht zur Fahrtrichtung des Reifens zu einem benachbarten Schulterblock (120) erstrecken, und eine zentrale Schulterblockseite aufweist, die sich radial nach innen in einer Richtung erstreckt, die parallel zur Fahrtrichtung des Reifens zum Mittelblock (110) verläuft, und wobei jeder einzelne Steinauswerfer (130) im Wesentlichen parallel zur peripheren Schulterblockseite (125) verläuft;
wobei die hörbaren Geräusche durch den Reifen (100) während der Benutzung erzeugt werden, wenn Luft zwischen der Vielzahl von Laufflächenblöcken, den Steinauswerfern (130) und den Hohlräumen (150) strömt;
und
eine Kerbe (128) an einer Position auf den peripheren Schulterblockseiten (125) gebildet ist; wobei die Kerbe eine Form und Größe hat, wobei die Form, Größe und Position der Kerbe (128) den Luftstrom und die hörbaren Geräusche, die durch den Reifen (100) während der Verwendung erzeugt werden, steuern.

## Revendications

1. Pneu (100) comprenant:
une partie de la bande de roulement (105) et une partie de la paroi latérale (200);
ladite partie de la bande de roulement (105) comporte des éléments de bande de roulement pour former un motif de bande de roulement, lesdits éléments de bande de roulement comprenant une pluralité de blocs de bande de roulement, d'éjecteurs de pierres (130) et de zones de vide (150);
dans lequel l'air circule entre la pluralité de blocs de la bande de roulement, les éjecteurs de pierres (130) et les zones de vide (150) pendant l'utilisation du pneu (100);
dans lequel des sons audibles sont générés par le pneu (100) en cours d'utilisation lorsque l'air circule entre la pluralité de blocs de la bande de roulement, les éjecteurs de pierres (130) et les zones de vide (150);
dans lequel la pluralité de blocs de bande de roulement comprend au moins un bloc central (110) et au moins un bloc d'épaulement (120) séparés par les zones de vide (150);
le bloc central (110) est situé au centre de la bande de roulement (105);
le bloc d'épaulement (120) est espacé latéralement du bloc central (110) et orienté à un angle par rapport à la direction de déplacement du pneu (100), l'angle étant inférieur à 90°;
dans lequel le bloc d'épaulement (120) a des côtés de bloc d'épaulement périphériques (125) qui s'étendent radialement vers l'extérieur dans une direction perpendiculaire à la direction de déplacement du pneu (100) vers un bloc d'épaulement adjacent (120) et un côté de bloc d'épaulement central qui s'étend radialement vers l'intérieur dans une direction qui est parallèle à la direction de déplacement du pneu (100) vers le bloc central (110), et dans lequel chaque éjecteur de pierre individuel des éjecteurs de pierre (130) est sensiblement parallèle au côté de bloc d'épaulement périphérique (125); et
dans lequel les côtés de l'épaulement périphérique (125) présentent une encoche (128);
dans lequel l'encoche (128) a une forme, une taille et une position sur les côtés du bloc d'épaulement périphérique (125);
dans lequel la forme, la taille et la position de l'encoche (128) contrôlent le flux d'air et les sons audibles générés par le pneu (100) pendant l'utilisation.

2. Pneu (100) selon la revendication 1, dans lequel une encoche (128) se trouve sur le côté de l'épaulement central.

3. Pneu (100) selon la revendication 1, dans lequel le bloc central (110) a un côté de bloc central.

4. Pneu (100) selon la revendication 3, dans lequel une encoche (128) se trouve sur le côté du bloc central.

5. Pneu (100) selon la revendication 1, dans lequel ladite encoche (128) a une forme hexagonale.

6. Système permettant de modifier les sons audibles générés par un pneu (100) en cours de fonctionnement, comprenant :
une partie de la bande de roulement (105) et une partie de la paroi latérale (200) d'un pneu (100);
ladite partie de la bande de roulement (105) comporte des éléments de bande de roulement pour former un motif de bande de roulement, lesdits éléments de bande de roulement comprenant une pluralité de blocs de bande de roulement, d'éjecteurs de pierres (130) et de zones de vide (150);
dans lequel l'air circule entre la pluralité de blocs de la bande de roulement, les éjecteurs de pierres (130) et les zones de vide (150) pendant l'utilisation du pneu (100);
dans lequel des sons audibles sont générés par le pneu (100) en cours d'utilisation lorsque l'air circule entre la pluralité de blocs de la bande de roulement, les éjecteurs de pierres (130) et les zones de vide (150);
dans lequel la pluralité de blocs de bande de roulement comprend au moins un bloc central (110) et au moins un bloc d'épaulement (120) séparés par les zones de vide (150);
le bloc central (110) est situé au centre de la bande de roulement (105);
le bloc d'épaulement (120) est espacé latéralement du bloc central (110) et orienté à un angle par rapport à la direction de déplacement du pneu (100), l'angle étant inférieur à 90°;
dans lequel le bloc d'épaulement (120) a des côtés de bloc d'épaulement périphériques (125) qui s'étendent radialement vers l'extérieur dans une direction perpendiculaire à la direction de déplacement du pneu (100) vers un bloc d'épaulement adjacent (120) et un côté de bloc d'épaulement central qui s'étend radialement vers l'intérieur dans une direction qui est parallèle à la direction de déplacement du pneu (100) vers le bloc central (110), et dans lequel chaque éjecteur de pierre individuel des éjecteurs de pierre (130) est sensiblement parallèle au côté de bloc d'épaulement périphérique (125); et
une encoche (128) sur les côtés de l'épaulement périphérique,
dans lequel l'encoche (128) a une forme, une taille et une position sur les côtés du bloc d'épaulement périphérique (125);
dans lequel la forme, la taille et la position de l'encoche (128) contrôlent le flux d'air et les sons audibles générés par le pneu (100) pendant l'utilisation.

7. Système selon la revendication 6, dans lequel le bloc central (110) a un côté de bloc central.

8. Système selon la revendication 7, dans lequel ladite encoche (128) se trouve sur le côté du bloc central.

9. Système selon la revendication 6, dans lequel l'encoche (128) a une forme hexagonale.

10. Méthode pour modifier les sons audibles générés par le pneu (100) pendant le fonctionnement, ladite méthode comprenant:
former une pluralité de blocs de bande de roulement ayant des côtés de blocs de bande de roulement, des éjecteurs de pierres (130) et des zones de vide (150) sur une partie de la bande de roulement (105) du pneu (100);
dans lequel la pluralité de blocs de bande de roulement comprend au moins un bloc central (110) et au moins un bloc d'épaulement (120);
le bloc central (110) est situé au centre de la bande de roulement (105);
le bloc d'épaulement (120) est espacé latéralement du bloc central (110) et orienté à un angle par rapport à la direction de déplacement du pneu (100), l'angle étant inférieur à 90°;
dans lequel le bloc d'épaulement (120) a des côtés de bloc d'épaulement périphériques (125) qui s'étendent radialement vers l'extérieur dans une direction perpendiculaire à la direction de déplacement du pneu (100) vers un bloc d'épaulement adjacent (120) et un côté de bloc d'épaulement central qui s'étend radialement vers l'intérieur dans une direction qui est parallèle à la direction de déplacement du pneu (100) vers le bloc central (110), et dans lequel chaque éjecteur de pierre individuel des éjecteurs de pierre (130) est sensiblement parallèle au côté de bloc d'épaulement périphérique (125);
les sons audibles sont générés par le pneu (100) en cours d'utilisation lorsque l'air circule entre la pluralité de blocs de la bande de roulement, les éjecteurs de pierres (130) et les zones de vide (150);
et
une encoche (128) est formée à un endroit des côtés du bloc d'épaulement périphérique (125); l'encoche a une forme et une taille, forme, la taille et la position de l'encoche (128) contrôlant l'écoulement de l'air et les sons audibles générés par le pneu (100) pendant l'utilisation.
